# EUROPEAN PATENT APPLICATION

(11) **EP 1 455 527 A1**
(43) Date of publication of application: **08.09.2004**
(21) Application number: 04001230.4
(22) Date of filing: 21.01.2004
(51) Int. Cl.: H04N 5/64

(54) **Television tuner unit having a small motherboard-mounted surface area**

(30) Priority: 27.02.2003 JP 2003000964
(71) Applicant: ALPS ELECTRIC CO., LTD., Tokyo 145-8501 (JP)
(72) Inventor: Yamamoto, Masaki c/o ALPS ELECTRIC CO.,LTD., Tokyo, 145 8501 (JP)
(74) Representative: Klunker . Schmitt-Nilson . Hirsch

(57) **Abstract**

A television tuner unit includes a tuner for frequency-converting a received television signal into an intermediate-frequency (IF) signal, a video IF circuit for demodulating the IF signal, and a metal frame having four side plates for housing the tuner and the video IF circuit. The internal space of the metal frame is divided into a first region on the side of the first side plate and a second region on the side of the second side plate, the first and second side plates facing each other. The video IF circuit is provided in the first region, and the tuner is provided in the second region. A connector for inputting the television signal is formed on the third side plate at the position corresponding to the second region. A plurality of terminals connected with the tuner and the video IF circuit are formed on the first side plate.

## Description

### BACKGROUND OF THE INVENTION

### 1. Field of the Invention

The present invention relates to television tuner units, and more specifically relates to a television tuner unit including a tuner for frequency-conversion of a received television signal into an intermediate-frequency (IF) signal, and a video IF circuit for demodulating the IF signal and outputting a video signal and an audio signal.

### 2. Description of the Related Art

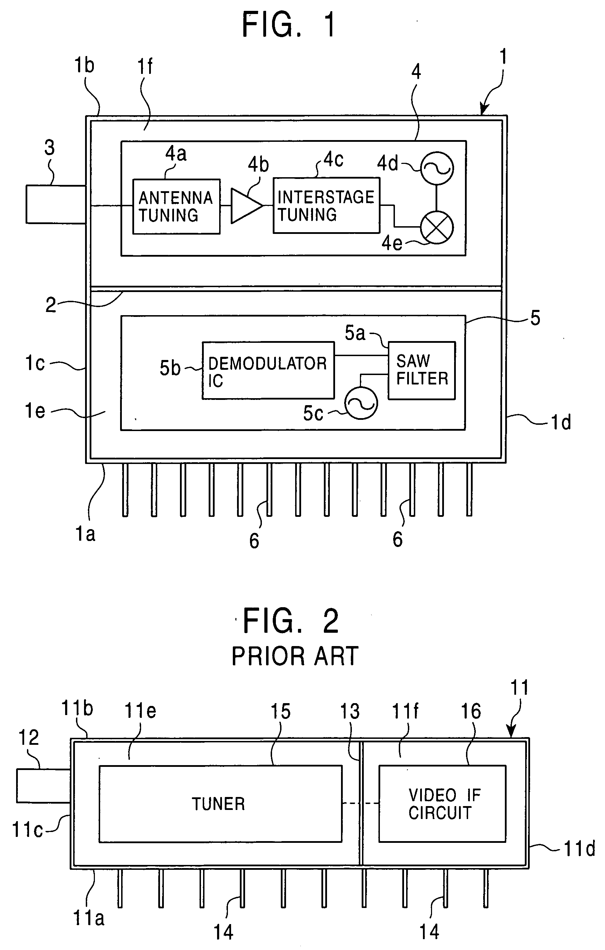

Fig. 2 is a plan view of a television (TV) tuner unit of the related art, showing the circuit arrangement thereof. In a rectangular metal frame 11 having first to fourth side plates 11a to 11d, the first side plate 11a and second side plate 11b on the longer side of the metal frame 11 face each other, and the third side plate 11c and fourth side plate 11d on the shorter side of the metal frame 11 face each other. The third plate 11c has a connector 12 through which a television signal is input.

The internal space of the metal frame 11 is divided into adjacent first and second regions 11e and 11f by a shield plate 13 extending between the first side plate 11a and the second side plate 11b. The first region 11e is formed on the side of the third side plate 11c having the connector 12, and the second region 11f is formed on the side of the fourth side plate 11d. Although not shown in Fig. 2, the first region 11e is further divided into a plurality of sub-regions by smaller shield plates. The first side plate 11a has a plurality of terminals 14 in such a manner that the terminals 14 are arranged in a row with a predetermined spacing therebetween. The metal frame 11 houses a circuit board (not shown) having circuits, and the shield plate 13 stands on the circuit board.

The first region 11e includes a tuner 15 for frequency-converting a received television signal into an intermediate-frequency (IF) signal, and the second region 11f includes a video IF circuit 16 for demodulating the IF signal and outputting a video signal and an audio signal. The terminals 14 are connected to the tuner 15 and the video IF circuit 16. Each of the tuner 15 and the video IF circuit 16 has different circuit structures depending upon the application.

The TV tuner unit is mounted on a TV receiver motherboard (not shown) by connecting the terminals 14 to the motherboard.

In the TV tuner unit of the related art, the first region 11e and the second region 11f are adjacently formed along the first side plate 11a having the terminals 14. Therefore, a large space corresponding to the area of the first side plate 11a is required in the TV receiver motherboard in order to install the TV tuner unit.

### SUMMARY OF THE INVENTION

Accordingly, it is an object of the present invention to provide a television tuner unit having a small surface mounted on a motherboard of a television receiver.

The present invention provides a television tuner unit including a tuner for frequency-converting a received television signal into an intermediate-frequency signal, a video intermediate-frequency circuit for demodulating the intermediate-frequency signal and outputting a video signal and an audio signal, and a metal frame having first to fourth side plates for housing the tuner and the video intermediate-frequency circuit. The internal space of the metal frame is divided into a first region on the side of the first side plate and a second region on the side of the second side plate, and the first side plate and the second side plate face each other. The video intermediate-frequency circuit is provided in the first region, and the tuner is provided in the second region. The third side plate has a connector at the position corresponding to the second region for inputting the television signal. The first side plate has a plurality of terminals connected with the tuner and the video intermediate-frequency circuit.

This allows the tuner and the video intermediate-frequency circuit to be accommodated in a space corresponding to the area of the first side plate having the terminals, thus reducing the space required in a television receiver motherboard in order to install the television tuner unit of the present invention.

The first region and the second region may be separated from each other by a shield plate extending between the third side plate and the fourth side plate, resulting in less interference between the tuner and the video intermediate-frequency circuit.

The tuner may include a mixer circuit for frequency conversion, and the video intermediate-frequency circuit may include a SAW filter. The mixer circuit may be positioned in the second region on the side of the fourth side plate, and the SAW filter may be positioned in the first region on the side of the fourth side plate, resulting in the minimum connection distance between the mixer circuit and the SAW filter.

### BRIEF DESCRIPTION OF THE DRAWINGS

Fig. 1 is a plan view of a TV tuner unit of the present invention; and
Fig. 2 is a plan view of a TV tuner unit of the related art.

### DESCRIPTION OF THE PREFERRED EMBODIMENTS

Fig. 1 is a plan view of a television (TV) tuner unit according to the present invention, showing the circuit arrangement thereof. A rectangular metal frame 1 has a pair of a first side plate 1a and a second side place 1b facing each other, and another pair of a third side plate 1c and a fourth side plate 1d facing each other. The internal space of the metal frame 1 is divided into a first region 1e on the side of the first side plate 1a and a second region 1f on the side of the second side plate 1b by a shield plate 2 extending between the third side plate 1c and the opposing fourth side plate 1d.

The third side plate 1c has a connector 3 at the position corresponding to the second region 1f, through which a television signal is input. The metal frame 1 houses a circuit board (not shown) having circuits. The second region 1f is further divided into a plurality of sub-regions by smaller shield plates, although not shown in Fig. 1.

The second region 1f includes a tuner 4 on the circuit board for frequency-converting the received television signal into an IF signal. The tuner 4 includes an antenna tuneing circuit 4a, a high-frequency amplifier circuit 4b, an interstage tuning circuit 4c, an oscillator circuit 4d, a mixer circuit 4e, and so on, and these circuits are designed so as to comply with a standard such as NTSC or PAL. The antenna tuning circuit 4a is positioned near the connector 3, and the oscillator circuit 4d and the mixer circuit 4e are positioned on the side of the fourth side plate 1d.

The first region 1e includes a video IF circuit 5 on the circuit board for demodulating the IF signal and outputting a video signal and an audio signal. The video IF circuit 5 includes a SAW (surface acoustic wave) filter 5a, a demodulator IC (integrated circuit) 5b, an oscillator circuit 5c, and so on, and these circuits are designed so as to comply with a standard such as NTSC or PAL. In the first region 1e, the SAW filter 5a is positioned on the side of the fourth side plate 1d.

The first side plate 1a has a plurality of terminals 6 in such a manner that the terminals 6 are arranged in a row with a predetermined spacing therebetween. The terminals 6 are connected with the tuner 4 and the video IF circuit 5 so as to supply power to the tuner 4 and the video IF circuit 5, to input a channel selection signal to the tuner 4, and to output the video signal and audio signal from the video IF circuit 5.

The video IF circuit 5 in the first region 1e and the tuner 4 in the second region 1f are accommodated in a space corresponding to the area of the first side plate 1a having the terminals 6. Therefore, the space required in the motherboard of the TV receiver in order to install the TV tuner unit can be reduced.

The first region 1e and the second region 1f are separated from each other by the shield plate 2, resulting in less interference between the tuner 4 and the video IF circuit 5.

In this structure, the television signal input via the connector 3 is selected and processed by the tuner circuits 4a and 4c and is also amplified by the high-frequency amplifier circuit 4b. The resulting signal is further converted into an IF signal by the mixer circuit 4e. The IF signal output from the mixer circuit 4e is input to the SAW filter 5a, and is then demodulated by the subsequent demodulator IC 5b into a video signal and an audio signal. Since the mixer circuit 4e of the tuner 4 and the SAW filter 5a of the video IF circuit 5 are adjacently positioned on the side of the fourth side plate 1d, the connection distance between the mixer circuit 4e and the SAW filter 5a can become minimum. The video signal and the audio signal are output via the terminals 6.

## Claims

1. A television tuner unit comprising:
a tuner for frequency-converting a received television signal into an intermediate-frequency signal;
a video intermediate-frequency circuit for demodulating the intermediate-frequency signal and outputting a video signal and an audio signal; and
a metal frame having first to fourth side plates for housing said tuner and said video intermediate-frequency circuit,
wherein the internal space of said metal frame is divided into a first region on the side of the first side plate and a second region on the side of the second side plate, the first side plate and the second side plate facing each other,
said video intermediate-frequency circuit is provided in the first region and said tuner is provided in the second region,
the third side plate has a connector at the position corresponding to the second region for inputting the television signal, and
the first side plate has a plurality of terminals connected with said tuner and said video intermediate-frequency circuit.

2. A television tuner unit according to Claim 1, wherein the first region and the second region are separated from each other by a shield plate extending between the third side plate and the fourth side plate.

3. A television tuner unit according to Claim 1 or 2, wherein said tuner includes a mixer circuit for frequency conversion, the mixer circuit being positioned in the second region on the side of the fourth side plate, and said video intermediate-frequency circuit includes a SAW filter in the first region on the side of the fourth side plate.
